**Europäisches Patentamt**

**European Patent Office**

**Office européen des brevets**

(19)

(11) Veröffentlichungsnummer: **0 201 759 B1**

(12) **EUROPÄISCHE PATENTSCHRIFT**

(45) Veröffentlichungstag der Patentschrift:
**03.08.88**

(21) Anmeldenummer: **86105416.1**

(22) Anmeldetag: **18.04.86**

(51) Int. Cl.⁴: **C 25 C 7/02**, C 25 B 11/04 //
C22C14/00, B32B15/01

(54) **Anode für elektrochemische Prozesse.**

(30) Priorität: **08.05.85 DE 3516523**

(43) Veröffentlichungstag der Anmeldung:
**20.11.86 Patentblatt 86/47**

(45) Bekanntmachung des Hinweises auf die Patenterteilung:
**03.08.88 Patentblatt 88/31**

(84) Benannte Vertragsstaaten:
**BE DE FR GB IT**

(56) Entgegenhaltungen:
**DE - A - 1 758 817**
**DE - A - 3 346 093**
**GB - A - 1 463 553**

**CHEMICAL ABSTRACTS, Band 79, Nr. 19, 12. November
1973, Columbus, Ohio, USA KATO KOSHI et al.
"Electrode alloys for electrolysis" Seite 146 Spalte 1,
Zusammenfassung-Nr. 117769e**

(73) Patentinhaber: **SIGRI GmbH,
Werner-von-Siemens-Strasse 18, D-8901 Meitingen (DE)**

(72) Erfinder: **Debrodt, Heiner, Dr. Ing., Lindenstrasse 12,
D-8851 Nordendorf (DE)**
Erfinder: **Kluger geb. Vihl, Petra, Dipl.-Ing. (FH),
Ottmarshauserstrasse 128, D-8902 Neusäss (DE)**
Erfinder: **Lieberoth, Dieter, Dipl.-Ing., eichenweg 12a,
D-8857 Wertingen (DE)**

**Beschreibung**

Die Erfindung betrifft eine Anode aus einer Titanlegierung, die besonders für die elektrochemische Gewinnung von Metallen oder Metallverbindungen geeignet ist.

Zur elektrochemischen Herstellung von Chlor, zur Gewinnung von Metallen aus salz- und schwefelsauren Elektrolyten, bei der Wasserelektrolyse und anderen elektrochemischen Prozessen verwendet man im wesentlichen aus einem passivierbaren Metall bestehende Elektroden, deren Oberflächen zur Verbesserung der Aktivität mit elektrochemisch aktiven Stoffen beschichtet sind, beispielsweise mit Platinmetallen oder Platinmetalloxiden. Die Aktivierungsschichten werden bei der Verwendung der Elektroden allmählich abgetragen oder ihre katalytische Wirkung lässt derartig nach, dass die Elektroden in gewissen Zeitabständen reaktiviert, d.h. mit einer neuen Beschichtung versehen werden müssen. Besonders klein ist die Standzeit der Aktivierungsschicht, wenn sich feste Elektrolyseprodukte wie Mangandioxid bei der Braunsteinelektrolyse, an der Elektrode anlagern, da bei der periodischen Entfernung des Produkts häufig Teile der Aktivierungsschicht abgerissen werden. Prinzipiell kann man diesen Verlust an Aktivierungsstoffen durch eine festere Verankerung oder Einbindung der Aktivierungsstoffe in Elektrodenbasis wenigstens vermindern. Einen gewissen Schutz erreicht man durch poröse Ausbildung der Elektrode und Einlagerung der aktivierenden Stoffe in die Poren.

Es ist auch bekannt, die Aktivierungsstoffe mit der Titanbasis der Elektrode zu legieren. Die Elektrodenbasis wird zu diesem Zweck mit einem Platinmetall beschichtet und durch Erhitzen der beschichteten Elektrode unter vermindertem Druck werden intermetallische Verbindungen der allgemeinen Formel MeTi oder MeTi₃ erzeugt, die einige Mikrometer tief in die Elektrode reichen (DE-OS 2 645 414). Derartige Diffusionsschichten sind stärkeren mechanischen Belastungen gewachsen, wegen des hohen Preises der Platinmetalle sind diese Elektroden aber vergleichsweise teuer. Es ist auch bekannt, für die elektrolytische Herstellung von Mangandioxid vorgesehene Titananoden an ihrer Oberfläche mit Mangan anzureichern, das durch Diffusion, Plasmaspritzen oder Aufsintern von Pulver-Gemischen aus Titan-Mangan aufgebracht wird (DE-OS 3 346 093). Der an der Oberfläche vorzugsweise 20 bis 60% betragende Mangangehalt soll innerhalb einer Schichtdicke von 0,1 bis 0,3 mm auf 0% absinken. Im Gegensatz zu Anoden die über ihre gesamte Dicke aus einer Titan-Mangan-Legierung der genannten Zusammensetzung bestehen, sind diese Anoden gut verformbar und lassen sich beispielsweise durch Walzen bearbeiten. Nachteilig ist die nicht immer den technischen Anforderungen genügende beschränkte Korrosionsbeständigkeit der Anode. Es ist schliesslich bekannt, Legierungen von Titan oder einem anderen passivierbaren Metall mit Chrom, Mangan, Rhenium, Eisen, Cobalt, Nickel, Zink, Kupfer, Silber, Gold, Cadmium, Zinn, Blei, Silicium, Germanium, Lanthan oder einem Platinmetall als Elektrode zu verwenden (GB-PS 1 463 553). Die Elektroden werden beispielsweise durch Formen und Sintern der in einem vorgegebenen Mengenverhältnis gemischten Metallpulver hergestellt und mit einer oberflächlichen Oxidschicht versehen, die durch eine besondere Oxidationsbehandlung oder bei der bestimmungsgemässen Verwendung der Elektroden gebildet wird, beispielsweise bei der Verwendung als Anode in einem wässerigen Elektrolyten. Die Elektroden sind chemisch und mechanisch widerstandsfähig und haben eine günstige elektrochemische Aktivität. Der Anteil der Legierungselemente beträgt bei diesem Elektrodentyp 0,1 bis 50%.

Bei einer anderen Lösung besteht die zur elektrochemischen Gewinnung von Metallen vorgesehene Elektrode aus einer Titanlegierung, die 51 bis 55% Nickel enthält (US-PS 4 363 706). Oberhalb dieses Bereichs nimmt die Korrorionsgeschwindigkeit der Anoden stark zu, unterhalb des Bereichs ist die Anode im wesentlichen aufgrund ihrer Sprödigkeit den mechanischen Belastungen nicht gewachsen. Der hohe Nickelgehalt ist jedoch in Elektroden nicht immer möglich, beispielsweise kann das Elektrolyseprodukt durch Nickelabrieb unzulässig verunreinigt werden. Der maximale zulässige Nickelgehalt in elektrolytisch erzeugten Braunsteinen beträgt z.B. nur einige ppm. Der Erfindung liegt deshalb die Aufgabe zugrunde, eine Anode aus einer Titanlegierung zu schaffen, die einen wesentlich geringeren Anteil an Nickel enthält, mechanisch und chemisch widerstandsfähig ist und eine gute, sich zeitlich kaum verändernde elektrochemische Aktivität hat.

Die Aufgabe wird mit einer Titananode der eingangs genannten Art gelöst, die aus einer Legierung aus

0,5 bis　5% Nickel
1　 bis 10% Mangan
Rest　　　Titan

besteht. Bevorzugt wird eine Legierung mit der Zusammensetzung

1　 bis　4% Nickel
2　 bis　5% Mangan
Rest　　　Titan.

Unter dem Begriff «Legierung» werden alle metallischen Kompositionen verstanden, die durch Schmelzen der die drei Komponenten enthaltenden Gemische oder bevorzugt durch Sintern von Pulvergemischen aus den Komponenten hergestellt worden sind. In den Sinterkörpern liegen die Komponenten der Legierungen im allgemeinen in grösseren Aggregationsformen vor als in den geschmolzenen Legierungen und oftmals sind benachbarte Phasen nicht im thermodynamischen Gleichgewicht, so dass es sich im Sinne der üblichen Terminologie um Gemenge handeln kann. Da der Übergang von der reinen Lösung zum reinen Gemenge fliessend ist und das Verhalten der Elektrode im üblichen Variationsbereich nicht wesentlich verändert wird, werden alle Zusammensetzungen unabhängig von der tatsächlichen Aggregationsform als «Legierung» bezeichnet. Das Mengenverhältnis der Legierungskomponenten ist immer in Massen- oder Gewichtsprozent angegeben.

Zur Herstellung der Anoden geht man von legierten Titanblechen, -stäben oder anderem Halbzeug aus, bevorzugt von Sinterkörpern, zu deren Herstellung feinkörniges Titan-, Nickel- und Manganpulver in vorgegebenem Verhältnis gemischt, und gegebenenfalls nach Zusatz von Presshilfsmitteln oder temporären Bindern- durch Gesenkpressen zu Körpern vorgegebener Gestalt und Abmessung verdichtet werden. Der Pressdruck beträgt dabei etwa 100 bis 300 MPa. Die Formlinge werden dann unter reduziertem Druck oder zweckmässig unter Schutzgas durch Erhitzen auf etwa 1100 bis 1300°C gesintert, wobei die Sinterdauer ca. 2 h beträgt. Höhere Schutzgasdrücke setzen die Verluste vor allem des Legierungselementes Mangan durch Verdampfen herab. Die Rohdichte der gesinterten Anoden, die im einzelnen von der Zusammensetzung der Legierung abhängt, ist etwa 3,5 bis 4,0 g/cm$^3$, der spezifische elektrische Widerstand etwa 0,2 bis 10 μΩm. Bevorzugt wird ein spezifischer elektrischer Widerstand unterhalb von 1 μΩm, da mit Anoden dieser Beschaffenheit auch bei kleiner Anodendicke eine befriedigende Stromdichten-Verteilung erzielt wird. Grösserflächige Anoden stellt man zweckmässig aus Teilschichten her, einer ersten Schicht oder Lage aus legiertem Titan, einer zweiten Schicht aus Titan, deren Dicke der erforderlichen Steifigkeit der Anode angepasst wird, und gegebenenfalls einer zweiten Schicht aus legiertem Titan, wenn zwei Flächen als Anode genutzt werden sollen. Zur Herstellung werden die verschiedenen zusammengesetzten Pulverschichten übereinandergeschichtet, wobei die Höhe jeder Schicht der Schichtdicke in der fertigen Anode proportional ist. Zur Anpassung der mechanischen Eigenschaften und der elektrischen Leitfähigkeit an die jeweiligen Betriebsbedingungen sind ggf. auch Anoden vorteilhaft, die eine andere Schichtfolge aufweisen, beispielsweise einer ersten dem Elektrolyten zugewandten, korrosionsbeständigen und elektrochemisch aktiven Schicht, einer zweiten Schicht mit einem kleinen elektrischen Widerstand und einer dritten mechanisch festen und zähen Schicht. Die Eigenschaften der Schichten werden in an sich bekannter Weise durch die Zusammensetzung des Pulvergemisches eingestellt. Der schichtige Aufbau der Anode ermöglicht ohne Beeinträchtigung ihrer Festigkeit und elektrischen Leitfähigkeit, die dem Elektrolyten zugekehrten Schichten porös auszubilden und damit die elektrochemisch aktive Oberfläche zu vergrössern. Derartige Anoden lassen sich elektrisch höher belasten, da die aktive Fläche beträchtlich grösser ist als die geometrische Anodenfläche. Porosität und Porengrössenverteilung können durch Auswahl der Korngrösse des Metallpulvers und der Press- und Sinterbedingungen den Verwendungsbedingungen angepasst werden, besonders zweckmässig ist eine Pororität von 10 bis 20%, und eine mittlere Porengrösse von einigen Mikrometern.

Erfindungsgemässe Anoden sind vor allem vorgesehen für die elektrochemische Gewinnung von Metallen, wie Kobalt oder Metallverbindungen wie Mangandioxid aus salzsauren oder schwefelsauren Elektrolyten. Sie sind grundsätzlich auch für andere Elektrolysen geeignet, z.B. die Chloralkali-Elektrolyse, für die in an sich bekannter Weise die elektrochemische Aktivität der legierten Anode durch Zusätze von 0,01 bis 0,1% eines Metalls der Platingruppe oder von Verbindungen eines oder mehrerer Metalle der Platingruppe den Elektrolysebedingungen angepasst werden kann. Das Platinmetall oder die Verbindung wird in Form eines feinen Pulvers zusammen mit den anderen Komponenten wie oben beschrieben zu Anoden verarbeitet oder die porösen Oberflächenzonen der Anode werden mit der Lösung eines Platinmetalls oder einer Platinmetallverbindung imprägniert und durch Erhitzen wird eine die innere Oberfläche der porösen Zonen wenigstens zu einem Teil bedeckende aus einem Platinmetall oder einem Platinmetall-Oxid bestehende Schicht erzeugt.

Die Erfindung wird im folgenden anhand von Beispielen und Zeichnungen erläutert. Es zeigen:

Fig. 1 die Korrosionsgeschwindigkeit von Anoden in Abhängigkeit vom Nickelgehalt,

Fig. 2 Bruchdehnung und Biegefestigkeit von Anoden in Abhängigkeit vom Mangangehalt.

*Beispiel 1*

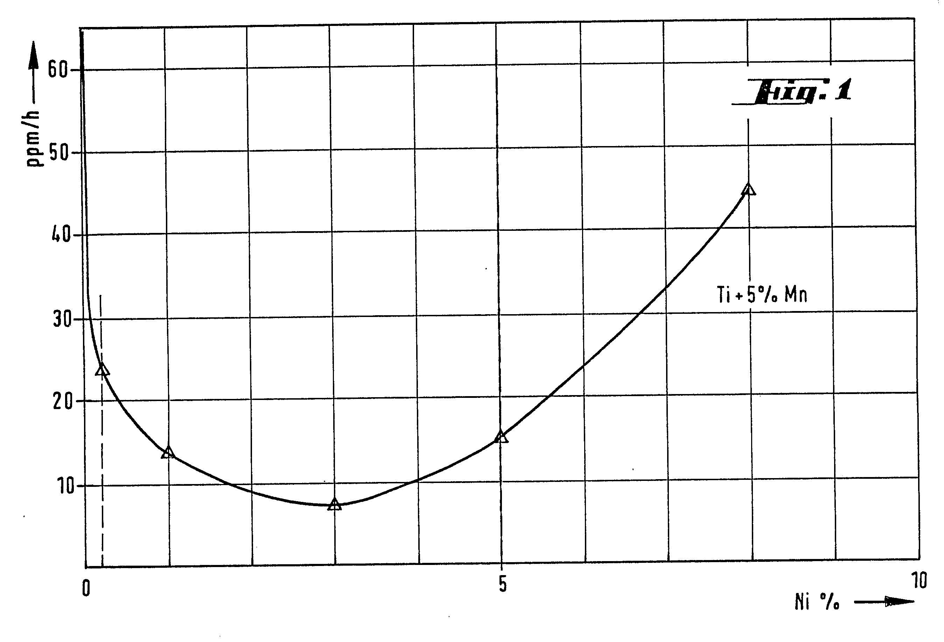

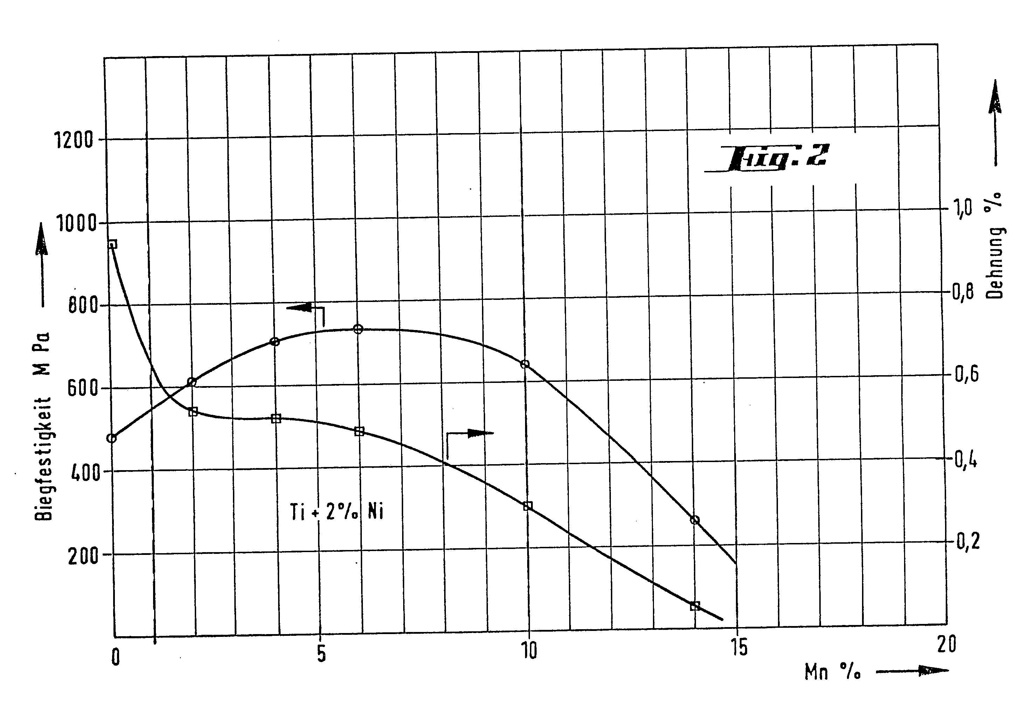

Zur Herstellung der Anoden wurde Titanpulver mit einer maximalen Korngrösse von 0,5 mm mit verschiedenen Mengen Nickel- und Manganpulver gemischt, deren maximale Korngrössen 0,01 mm betrugen, und das Pulvergemisch bei Raumtemperatur zu quaderförmigen Platten 4 × 80 × 800 mm$^3$ verdichtet, wobei durch Änderung des Pressdrucks im Bereich zwischen 180 und 200 MPa die Dichte der gesinterten Körper auf etwa 3,80 bis 3,90 g/cm$^3$ und der spezifische elektrische Widerstand auf 0,5 bis 1,0 μΩm eingestellt wurden. Gesintert wurden die Formlinge durch Erhitzen auf 1200°C unter Argon als Schutzgas. Jeweils fünf Proben der gleichen Zusammensetzung wurden einem Korrosionstest unterworfen und zu diesem Zweck in einem Glaskolben mit 10%iger Schwefelsäure bei einer Temperatur von 95°C ± 3K untersucht. Indikatoren des Korrosionsfortschritts waren die Menge des sich entwickelnden Wasserstoffs, die Gewichtsabnahme der Proben und die Menge der gelösten Korrosionsprodukte. Die zu einer mittleren Korrosionsgeschwindigkeit zusammengefassten Messwerte sind in Fig. 1 gegen den Nickelgehalt einer Titananode mit 5% Mangan aufgetragen. Schon kleinere Nickelzusätze zu der Titan-Mangan-Legierung bewirken eine beträchtliche Abnahme der Korrosionsgeschwindigkeit, die bei einem Nickelgehalt von etwa 3% am geringsten ist. Die Korrosionsgeschwindigkeit von Titan-Mangan-Legierungen ist unter den Versuchsbedingungen derart gross, dass ihre Verwendung als Anode praktisch nicht möglich ist. Für Anoden mit einer befriedigenden Lebensdauer sollte der Nickelgehalt wenigstens 0,5% und höchstens 5% betragen. In Fig. 2 ist die Biegefestigkeit und die Bruchdehnung unter Zugspannung als Funktion des Mangangehalts für Anoden mit 2% Nickel aufgetragen. Die Biegefestigkeit nimmt mit dem Zusatz von Mangan bis zu einem Gehalt von etwa 6% zu und fällt darüber stetig ab. Die als Mass der Sprödigkeit im Zugversuch gemessene Bruchdehnung ist für Manganfreie Legierung am grössten. Oberhalb eines Gehalts von 10% ist die Bruchdehnung bereits derart klein und die Sprödigkeit entsprechend gross, dass das Formen der Anoden durch Walzen, Biegen und andere nichtspanende Verfahren praktisch nicht mehr

möglich ist. Der Mangan-Gehalt der Anodenlegierung sollte daher nicht mehr als 10%, vorzugsweise nicht mehr als 5% betragen.

*Beispiel 2*

Wie im Beispiel 1 beschrieben wurden gesinterte Anoden mit den Probennummern 1 bis 5 durch Mischen von Titan-, Mangan- und Nickelpulver, Formen des Gemisches und Sintern der Formlinge hergestellt. Die Herstellung der Proben 6 bis 12 und die Zusammensetzung aller Anoden ist in Tabelle I aufgelistet.

### TABELLE I

| Proben-nummer | Titan (%) | Mangan (%) | Nickel (%) |
|---|---|---|---|
| 1 | 82 | 15 | 3 |
| 2 | 94 | 5 | 1 |
| 3 | 92 | 5 | 3 |
| 4 | 91 | 7 | 2 |
| 5 | 96 | 3 | 1 |
| 6 | 89 | 10 | 1 |
| 7 | 89 | 10 | 1 |
| 8 | 93 | 5 | 2 |
| 9 | 100 (gesintert) | — | — |
| 10 | 100 (Blech) | — | — |
| 11 | 97 | — | 3 |
| 12 | 90 | 10 | — |

Zur Herstellung der Probe 6 wurde ein Formling der Zusammensetzung 5 mit einer etwa 0,5 mm dicken Pulverschicht der Zusammensetzung 6, die mit wässeriger Methylcellulose angeteigt war, bestrichen und der beschichtete Formling gesintert. Probe 7 besteht aus einem 4 mm dicken Titanblech als Anodenbasisschicht und einer durch Plasmaspritzen aufgetragenen Legierungsschicht mit einer Dicke von 0,3 mm. Probe 8 ist ein Sinterkörper mit einer Rohdichte von 4,43 g/cm$^3$, der mit einem Pressdruck von 400 MPa hergestellt wurde. Zum Vergleich wurden Anoden aus reinem Titan (Probe 9 — Sinterkörper, Probe 10 — Blech) und aus einer Titan-Nickel- (Probe 11) und einer Titan-Mangan-Legierung hergestellt und geprüft.

Alle Anoden wurden dem im Beispiel 1 beschriebenen Korrosionstest unterworfen, die Passivierung wurde in 0,5 m $H_2SO_4$ bei 25°C und 200 A/m$^2$ und das Verhalten der Anoden bei der elektrolytischen Herstellung von Braunstein bestimmt. Der Elektrolyt enthielt 35 g/l Mn, 60 g/l $H_2SO_4$, die Elektrolysebedingungen waren: Temperatur 95 bis 98°C, Stromdichte 140 A/m$_2$, Anodenfläche 47,5 cm$^2$. Als Kathoden fanden Graphitplatten Verwendung. Die auf der Anode aufgewachsene Mangandioxid-Schicht wurde jeweils nach 12 Tagen entfernt und die Zellenspannung jeweils an dem darauffolgenden Tag gemessen. Die Ergebnisse sind in Tabelle II dargestellt.

### TABELLE II

| Proben-Nr. | A Passivierungstest | | B Korrosionstest | C Mangandioxidabscheidung | | |
|---|---|---|---|---|---|---|
| | t | U | | Zyklenzahl | U | U |
| 1 | 867 h | 4,7 V | 10 ppm | 12 | 2,18 V | 3,02 V |
| 2 | 1841 h | 5,1 | 15 | 12 | 2,13 | 2,95 |
| 3 | 1493 h | 4,9 | 10 | 10 | 2,15 | 2,97 |
| 4 | 1610 h | 5,2 | 10 | 10 | 2,15 | 2,98 |
| 5 | 1943 h | 4,9 | 10 | 10 | 2,22 | 3,01 |
| 6 | 1610 h | 4,7 | 10 | 10 | 2,221 | 3,09 |
| 7 | 1610 h | 5,3 | 860 | 10 | 2,23 | 2,91 |
| 8 | 1432 h | 5,7 | 10 | 10 | 2,25 | 3,05 |
| 9 | 50 s | 6,5 | 45 000 | 12 | 2,43 | 4,25 |
| 10 | 10 s | 9 | 23 000 | 1 | 2,15 | +) |
| 11 | 28 h | 4,2 | 10 | 10 | 2,26 | 3,68 |
| 12 | 1569 h | 3,5 | 44 000 | 10 | 2,19 | 3,02 |

+) passiv nach 6 Tagen

Reines Titan (9, 10) bildet nach wenigen Sekunden eine den elektrischen Strom nicht leitende Passivierungsschicht und ist als Anode nicht geeignet. Auch Anoden aus Mangan-freien Legierungen (11) bilden vergleichsweise schnell Passivierungsschichten, so dass sie trotz kleiner Korrosionsgeschwindigkeit technisch nicht brauchbar sind. Aus Nickel-freien Titan-Mangan-Legierungen bestehende Anoden (12) korrodieren ähnlich stark wie Anoden aus reinem Titan. Die aus ternären Legierungen bestehenden Anoden 1 bis 8 bilden keine Passivierungsschicht, korrodieren sehr langsam und verhalten sich günstig bei der elektrolytischen Erzeugung von Mangandioxid. Die Probe 1 ist wegen ihrer Sprödigkeit (s. Fig. 2) den mechanischen Belastungen in einem Elektrolysebetrieb nicht gewachsen, z.B. den beim Ernten des Mangandioxids auf die Anode wirkenden Stössen. Durch die mit Mangan-Gehalten über 10% steigende Strödigkeit der Anode wird trotz des befriedigenden elektrochemischen Verhaltens ihre Verwendbarkeit beschränkt, da auch durch eine Verbindung mit schlagzähen Trägerplatten die Sprödigkeit nicht ausgeglichen werden kann. Bei stossartiger Beanspruchung lösen sich vielmehr mehr oder weniger häufig grössere Teile der Anode von ihrem Träger, wodurch die Lebensdauer der Anode wesentlich verkürzt wird.

**Patentansprüche**

1. Anode, besonders für die elektrochemische Gewinnung von Metallen und Metallverbindungen, bestehend aus einer Titanlegierung aus

0,5 bis 5% Nickel
1 bis 10% Mangan
Rest Titan.

2. Anode nach Patentanspruch 1, dadurch gekennzeichnet, dass die Titanlegierung aus

1 bis 4% Nickel
2 bis 5% Mangan
Rest Titan

besteht.

3. Anode nach den Patentansprüchen 1 und 2, dadurch gekennzeichnet, dass die Anode ein Sinterkörper ist.

4. Anode nach den Patentansprüchen 1 bis 3, dadurch gekennzeichnet, dass die Rohdichte grösser als 3,80 g/cm$^3$ und der spezifisch elektrische Widerstand kleiner als 1 μΩm ist.

5. Anode nach den Patentansprüchen 3 und 4, dadurch gekennzeichnet, dass der Sinterkörper aus mehreren Schichten unterschiedlicher Zusammensetzung besteht.

6. Anode nach den Patentansprüchen 3 bis 5, dadurch gekennzeichnet, dass die oberflächennahen Schichten porös sind.

7. Anode nach den Patentansprüchen 3 bis 6, dadurch gekennzeichnet, dass in den porösen Schichten Metalle der Platingruppe oder Verbindungen von Metallen der Platingruppe eingelagert sind.

8. Anode nach dem Patentanspruch 7, dadurch gekennzeichnet, dass der Gehalt an Metallen der Platingruppe oder von Verbindungen dieser Metalle 0,01 bis 0,1% beträgt.

**Claims**

1. Anode, especially for the electrowinning of metals and metal compounds, consisting of an alloy of titanium of
0.5 to 5% nickel
1 to 10% manganese
remainder titanium.

2. Anode according to claim 1, characterised in that the titanium alloy consists of 1 to 4% nickel
2 to 5% manganese
remainder titanium.

3. Anode according to claims 1 and 2, characterised in that the anode is a sintered body.

4. Anode according to claims 1 to 3, characterised in that the bulk density is greater than 3.80 g/cm$^3$ and the specific electrical resistance is smaller than 1 μΩm.

5. Anode according to claims 3 and 4, characterised in that the sintered body consists of several layers of different composition.

6. Anode according to claims 3 to 5, characterised in that the layers near the surface are porous.

7. Anode according to claims 3 to 6, characterised in that metals of the platinum group or compounds of metals of the platinum group are deposited in the porous layers.

8. Anode according to claim 7, characterised in that the content of metals of the platinum group or of compounds of these metals amounts to 0.01 to 0,1%.

**Revendications**

1. Anodes, en particulier pour la récupération électrochimique de métaux et composés métalliques, constituées d'un alliage de Titane de:

0,5 à 5% Nickel
1 à 10% Manganèse
le reste étant du Titane.

2. Anodes suivant la revendication 1, caractérisées en ce que l'alliage de Titane est constitué de:

1 à 4 % Nickel
2 à 5 % Manganèse
le reste étant du Titane.

3. Anodes suivant les revendications 1 et 2, caractérisées en ce que l'anode est un corps fritté.

4. Anodes suivant les revendications 1 à 3, caractérisées en ce que la densité brute est supérieure à 3,80 g/cm$^3$ et la résistance électrique spécifique inférieure à 1 μΩm.

5. Anodes suivant l'une des revendications 3 et 4, caractérisées en ce que le corps fritté est composé de plusieurs couches de compositions différentes.

6. Anodes suivant les revendications 3 à 5, caractérisées en ce que les couches voisines de la surface sont poreuses.

7. Anodes suivant les revendications 3 à 6, caractérisées en ce que, dans les couches poreuses, sont déposés des métaux du groupe du platine, ou des composés de métaux du groupe du platine.

8. Anodes suivant la revendication 7, caractérisées en ce que la teneur en métaux du groupe du platine ou en composés de ces métauc se monte à 0,01 à 0,1%.

Fig. 1

Fig: 2